# EUROPÄISCHE PATENTSCHRIFT

(11) **EP 1 799 746 B1**
(45) Veröffentlichungstag und Bekanntmachung des Hinweises auf die Patenterteilung: **10.06.2009**
(21) Anmeldenummer: 05756506.1
(22) Anmeldetag: 18.06.2005
(51) Int. Cl.: C08G 63/81, C08G 63/181

(54) **VERFAHREN ZUR HERSTELLUNG VON POLYESTERN**
METHOD FOR PRODUCING POLYESTERS
PROCEDE DE PRODUCTION DE POLYESTERS

(30) Priorität: 28.09.2004 DE 102004047076
(43) Veröffentlichungstag der Anmeldung: 27.06.2007
(73) Patentinhaber: Lurgi Zimmer GmbH, 60295 Frankfurt am Main (DE)
(72) Erfinder: DEISS, Stefan, 55296 Harxheim (DE); REISEN, Michael, 60316 Frankfurt am Main (DE); HELDMANN, Karl-Heinz, 65479 Raunheim (DE); SEIDEL, Eckhard, 60389 Frankfurt am Main (DE)
(74) Vertreter: Meyer-Dulheuer, Karl-Hermann
(86) Internationale Anmeldenummer: PCT/EP2005/006591
(87) Internationale Veröffentlichungsnummer: WO 2006/034740

(56) Entgegenhaltungen:
- EP-A- 0 245 665
- EP-A- 0 882 758
- WO-A-01/60888
- WO-A-20/04035515
- WO-A-20/04063139
- WO-A-20/04081080
- US-A- 4 223 124
- US-B1- 6 335 421
- DATABASE WPI Section Ch, Week 199941 Derwent Publications Ltd., London, GB; Class A23, AN 1999-479621 XP002342130 -& BR 9 706 172 A (RHODIA-STER FIBRAS LTDA) 6. Juli 1999 (1999-07-06)
- DATABASE WPI Section Ch, Week 200161 Derwent Publications Ltd., London, GB; Class A23, AN 2001-544877 XP002342131 -& JP 2001 200042 A (NIPPON ESTER CO LTD) 24. Juli 2001 (2001-07-24)
- DATABASE WPI Section Ch, Week 199610 Derwent Publications Ltd., London, GB; Class A92, AN 1996-093101 XP002342132 -& JP 08 001863 A (TORAY IND INC) 9. Januar 1996 (1996-01-09)
- DATABASE WPI Section Ch, Week 196800 Derwent Publications Ltd., London, GB; Class A14, AN 1968-71803P XP002342139 -& NL 6 505 486 A (UNILEVER-EMERY NV) 31. Oktober 1966 (1966-10-31)

## Beschreibung

Die Erfindung betrifft ein Verfahren zur Herstellung von Polyestern ausgehend von einer gesättigten Lösung einer aromatischen Dicarbonsäure und einem aliphatischen und/oder cycloaliphatischen Diol, wobei die aromatische Dicarbonsäure und das aliphatische und/oder cycloaliphatische Diol in Gegenwart einer Monocarbonsäure oder einer Lösung einer Monocarbonsäure in Wasser oder einem anderen geeigneten Lösungsmittel miteinander reagieren und dann in weiteren Verfahrensschritten zum Polyester polykondensiert werden.

In der internationalen Patentanmeldung WO 2004/035515 wird ein Verfahren zur Herstellung eines Gemisches aus einer Dicarbonsäure und einem Diol beschrieben, das für die Herstellung von Polyestern geeignet ist. Hierzu wird die Dicarbonsäure in Wasser suspendiert, mittels Hydrierung entfärbt und die erhaltene wässrige Suspension unter Bildung eines Hydroxyalkylesters mit dem Diol zur Reaktion gebracht; der Hydroyxalkylester wird anschließend zum Polyester umgesetzt. Nachteilig ist jedoch, dass die Veresterung der Dicarbonsäure, beispielsweise der Terephthalsäure, in Gegenwart von Wasser sich als schwierig erweist und demzufolge besondere Reaktionsbedingungen erfordert.

Besondere Reaktionsbedingungen sind umso mehr notwendig, wenn beispielsweise Terephthalsäure oder eine andere Dicarbonsäure in einem Essigsäure- bzw. Monocarbonsäure-Wasser-Gemisch vorliegt, da unter diesen Reaktionsbedingungen die Veresterung mit einem Diol nach einem anderen Mechanismus abläuft und die Spaltung des gebildeten Esters stark bevorzugt ist.

Es sind auch bereits aus den internationalen Patentanmeldungen WO 2004/052820, WO 2004/052821 und WO 2004/052822 Verfahren zur Herstellung von Polyethylenterephthalaten bekannt, bei denen die Hydrierung im essigsauren Medium durchgeführt wird. Aus der internationalen Patentanmeldung WO 2004/063139 ist ein Verfahren zur Herstellung von hochreinen Polyethylenterephthalaten in essigsaurem Medium ohne Hydrierung bekannt. Allerdings wird dort die Verwendung der essigsauren Polyethylenterephthalat-Roh- und Zwischenprodukte zur weiteren Polyesterherstellung nicht beschrieben.

Der vorliegenden Erfindung stellte sich deshalb die Aufgabe, ein Verfahren zur Herstellung von Polyestern zu entwickeln, bei dem ausgehend von einer gesättigten Lösung einer aromatischen Dicarbonsäure und einem aliphatischen und/oder cycloaliphatischen Diol die vorstehend genannten Nachteile nicht auftreten.

Diese Aufgabe wird erfindungsgemäß dadurch gelöst, dass eine in einer gesättigten Lösung vorliegende aromatische Dicarbonsäure in Gegenwart einer Monocarbonsäure oder eines Gemisches einer Monocarbonsäure mit Wasser oder einem anderen geeigneten Lösungsmittel mit einem aliphatischen und/oder cycloaliphatischen Diol zu einem Dicarbonsäurealkandiolestercarboxylat und/oder dessen Oligomeren umgesetzt wird, die in weiteren Verfahrensschritten zum Polyester polykondensiert werden.

Überraschenderweise konnten erfindungsgemäß Reaktionsbedingungen gefunden werden, die eine Umsetzung der in einer gesättigten Lösung vorliegenden aromatischen Dicarbonsäure mit einem Alkandiol ermöglichen. Dabei werden Dicarbonsäurealkandiolester-Oligomere gebildet, deren Hydroxylendgruppen größtenteils mit einer Monocarbonsäure, zum Beispiel Essigsäure, verestert vorliegen. Außerdem werden bei dieser Reaktion auch Diolester der eingesetzten Monocarbonsäure gebildet.

Bei dieser Reaktion hat sich gezeigt, dass die Konzentration an Dicarbonsäurealkandiolestercarboxylaten und deren Oligomeren im Reaktionsgemisch umso höher ist, je höher die Konzentration der Monocarbonsäure im Reaktionsgemisch ist. Dadurch wird die Löslichkeit der aromatischen Dicarbonsäure im Reaktionsgemisch erhöht. Die gelöste aromatische Dicarbonsäure ist wesentlich reaktiver als die feste aromatische Dicarbonsäure. Durch die Reaktion der aromatischen Dicarbonsäure mit dem Alkandiol wird das Löslichkeitsgleichgewicht entscheidend beeinflusst und die aromatische Dicarbonsäure nachgelöst, die dann anschließend mit dem Alkandiol reagieren kann.

Parallel dazu reagiert zumindest ein Teil der Monocarbonsäure zunächst mit dem Alkandiol und wird dann durch Umesterung mit der aromatischen Dicarbonsäure wieder freigesetzt. Besonders vorteilhaft ist es, wenn die Alkandiolmonocarboxylate bereits in einer Vorreaktion gebildet werden und dann als Reaktionspartner für die aromatische Dicarbonsäure zur Verfügung stehen, ohne dass im Veresterungs- und Polykondensationsprozess Wasser abgespalten werden muss. Eine Besonderheit des erfindungsgemäßen Verfahrens ist, dass im Gegensatz zur konventionellen Terephthalsäureveresterung im Polyethylenterephthalatprozess kaum Dialkylenglykol, d. h. beispielsweise im PET-Prozess Diethylenglykol, gebildet wird. Falls für spezielle Anwendungen Polyester mit höherem Dialkylenglykolgehalt benötigt werden, so ist es zweckmäßig, das Dialkylenglykol zusätzlich in den Prozess einzuspeisen.

Weitere vorteilhafte Einzelheiten der Erfindung werden im Folgenden näher erläutert.

Danach werden für das erfindungsgemäße Verfahren als aromatische Dicarbonsäuren Terephthalsäure, Isophthalsäure, Diphenyldicarbonsäure und/oder Naphthalindicarbonsäure eingesetzt. Bevorzugt ist die Verwendung von Terephthalsäure als aromatische Dicarbonsäure, neben der Isophthalsäure, Diphenyldicarbonsäure und/oder Naphthalindicarbonsäure im Allgemeinen in einer Konzentration von 0 bis 95 Gew.-%, bezogen auf die Menge der Terephthalsäure, eingesetzt werden können.

Im Allgemeinen weist das aliphatische Diol 2 bis 16 C-Atome und das cycloaliphatische Diol 5 bis 12 C-Atome auf, bevorzugt sind jedoch Ethylenglykol, Trimethylenglykol, Tetramethylenglykol und Cyclohexandimethanol. Außerdem kann auch ein Gemisch aus verschiedenen aliphatischen und/oder cycloaliphatischen Diolen eingesetzt werden kann.

Die verwendeten Monocarbonsäuren werden aus der Gruppe Essigsäure, Ameisensäure, Propionsäure, Buttersäure, Valeriansäure und Capronsäure ausgewählt. Sie werden in der Regel in einem Lösungsmittel gelöst zur Anwendung gebracht. Zudem kann auch ein Gemisch aus verschiedenen Monocarbonsäuren eingesetzt werden. Die Gesamtkonzentration an Monocarbonsäuren im Reaktionsgemisch kann z.B. bei Verwendung von Essigsäure 5 bis 99 Gew.-% betragen, bezogen auf das Gewicht der eingesetzten aromatischen Dicarbonsäure.

Es ist auch möglich, an Stelle eines aliphatischen und/oder cycloaliphatischen Diols einen oder mehrere aliphatische Alkandiolester zu verwenden, so dass die Abspaltung von Wasser vermieden wird. Die bevorzugten Alkandiolester sind Ethylenglykolmonoacetat und Ethylenglykoldiacetat.

Die Umsetzung der aromatischen Dicarbonsäure mit dem aliphatischen und/oder cycloaliphatischen Diol in Gegenwart einer Monocarbonsäure oder einer Lösung einer Monocarbonsäure in Wasser oder einem anderen geeigneten Lösungsmittel kann sowohl in Gegenwart eines Katalysators als auch ohne einen Katalysator durchgeführt werden. Ein bevorzugter Katalysator ist ein Element aus der Gruppe Mg, Ca, Ba, Zn, Co, Al, Sb, Ti, Sn, Zr, Ge oder eine Kombination mehrerer dieser Elemente.

Das Molverhältnis der aromatischen Dicarbonsäure zum aliphatischen und/oder cycloaliphatischen Diol beträgt im Allgemeinen 0,1 : 10 bis 10: 1 und die Gesamtkonzentration der aromatischen Dicarbonsäuren liegt üblicherweise zwischen 0,1 bis 50 Gew.-%, bezogen auf die Gesamtmenge des Reaktionsgemisches, wobei die aromatischen Dicarbonsäuren vor der Reaktion entweder in gelöster Form oder ungelöst vorliegen. Der Anteil des aliphatischen und/oder cycloaliphatischen Diols im Reaktionsgemisch kann zwischen 0,1 und 70 Gew.-% liegen.

Unter den erfindungsgemäßen Reaktionsbedingungen findet bei einer Temperatur zwischen 100 - 350°C und einem Druck von 700 mbar bis zu 100 bar eine Umsetzung der aromatischen Dicarbonsäure mit den Alkandiolen statt. In einer bevorzugten Ausführungsform findet die Umsetzung bei einer Temperatur zwischen 150 bis 300°C statt. Der Druck beträgt bevorzugt 2 bis zu 40 bar, besonders bevorzugt 10 bis zu 30 bar. Dabei werden z.B. Terephthalsäurealkandiolester-Oligomere gebildet, deren Hydroxylendgruppen größtenteils mit Essigsäure verestert vorliegen. Daneben werden auch Essigsäurediolester gebildet, wenn Essigsäure als Monocarbonsäure zum Einsatz kommt.

Bei Durchführung des erfindungsgemäßen Verfahrens hat sich gezeigt, dass die Konzentration an Oligomeren des Terephthalsäurealkandiolesters umso höher ist, je höher die Konzentration der Monocarbonsäure im Reaktionsgemisch ist. Auch ist die gelöste Terephthalsäure wesentlich reaktiver als die aus der Lösung auskristallisierte feste Terephthalsäure. Die feste Terephthalsäure löst sich jedoch bei dem erfindungsgemäßen Verfahren schnell auf, da bei der Reaktion der gelösten Terephthalsäure mit dem Alkandiol das Löslichkeitsgleichgewicht entscheidend beeinflusst wird.

Parallel dazu reagiert zumindest ein Teil der Monocarbonsäure zunächst mit dem Alkandiol zu einem Monocarbonsäurealkandiolester, aus dem dann durch Umesterung mit der aromatischen Dicarbonsäure die Monocarbonsäure wieder frei gesetzt wird.

Wie bereits erwähnt ist es vorteilhaft, wenn die Monocarbonsäurealkandiolester bereits in einer Vorreaktion gebildet werden und dann als Reaktionspartner der aromatischen Dicarbonsäure zur Verfügung stehen. Dann können die nachfolgenden Umesterungen und Polykondensationen ohne Wasserabspaltung erfolgen.

Diese Verfahrensweise ist deshalb anzustreben, weil Wasser auf Grund seiner hohen Verdampfungsenthalpie so früh wie möglich aus dem Reaktionsgemisch entfernt werden sollte, um die nachfolgenden Prozesse energetisch so günstig wie möglich führen zu können. Die Monocarbonsäuren wie Essigsäure haben eine wesentlich geringere Verdampfungsenthalpie und sind außerdem für den weiteren Prozess als Lösungsmittel sowie auch als Veresterungskatalysator förderlich. Insbesondere bei einer Verfahrensführung ohne Zugabe eines speziellen Veresterungskatalysators übernimmt die Monocarbonsäure eine Katalysatorfunktion.

Im Allgemeinen wird jedoch die Umesterung des Dicarbonsäurealkandiolestercarboxylats und/oder dessen Oligomeren in Gegenwart eines Katalysators vorgenommen, der aus den Elementen Mg, Ca, Ba, Zn, Co, Al, Sb, Ti, Sn, Zr , Ge oder aus einer Kombination dieser Elemente ausgewählt wird. Die hierbei freigesetzte Monocarbonsäure, Wasser und ein Teil der Carbonsäurealkandiolester werden dann über Brüden aus dem Reaktionssystem entfernt und einer Rektifikationskolonne zugeführt. Dort wird der Carbonsäurealkandiolester als schwerer siedendes Kondensat von den übrigen Leichtsiedern abgetrennt und in den Prozess zurückgeführt.

Hierbei wurde überraschenderweise beobachtet, dass unter den Rektifikationsbedingungen die Carbonsäurealkandiolester zumindest teilweise in Monocarbonsäure und Alkandiol hydrolysiert werden, so dass das Alkandiol für den Wiedereinsatz in den Prozess zurückgewonnen werden kann. Die bei der Rektifikation anfallende Monocarbonsäure sowie ein Teil des Wassers können ebenfalls in den Prozess zurückgeführt werden.

Die bei dem erfindungsgemäßen Verfahren gebildeten Dicarbonsäurealkandiolestercarboxylate und deren Oligomere können anschließend bei einer Temperatur zwischen 100 - 350°C und einem Druck von 20 bar bis zu 100 mbar in einer oder mehreren weiteren Umesterungsstufen in Abhängigkeit von den vorhandenen freien aromatischen Carboxylgruppen mit einer definierten Menge Alkandiol und einem geeigneten Katalysator umgesetzt werden. In einer bevorzugten Ausführungsform findet diese Umsetzung bei einer Temperatur zwischen 220 - 330°C statt. Der Druck beträgt bevorzugt 10 bar bis zu 400 mbar.

So wird beispielsweise bei zwei weiteren Umesterungsstufen die erste Stufe bevorzugt bei 1 - 15 bar, besonders bevorzugt bei 2 - 10 bar betrieben. Die zweite Stufe wird dann bevorzugt bei 0,4 - 4 bar, besonders bevorzugt bei 0,5 - 2,5 bar betrieben.

In diesen Umesterungsstufen wird auch aus den Estern der Monocarbonsäure mit den Dicarbonsäurealkandiolestern und deren Oligomeren die frei werdende Monocarbonsäure abgetrennt und mit dem ebenfalls durch die Veresterung der restlichen freien Carboxylgruppen entstehenden Reaktionswasser sowie dem überschüssigen Alkandiol über die Brüden der Rektifikationskolonne zugeführt.

Es ist vorteilhaft, die Terephthalsäureveresterung auf einen Umsatzgrad von über 90% zu bringen, um den nachfolgenden Prozess entsprechend eines üblichen Polyesterprozesses fahren zu können.

In der nachfolgenden Prepolykondensation und Polykondensation wird der Carbonsäurealkandiolester und/oder seine Oligomeren bei einer Temperatur zwischen 100 - 350°C und einem Druck von 2000 mbar bis zu 0,1 mbar Bedingungen unterworfen, wie sie bei der Herstellung von Polyestern üblich sind.

Weiterhin wurde überraschenderweise festgestellt, dass bei dem erfindungsgemäßen Verfahren aliphatische Etherkomponenten nur in Mengen unter 0,1 Gew.-% entstehen, was für Verfahren auf TPA-Basis sehr ungewöhnlich ist.

Gegenstand der Erfindung sind deshalb auch Polyester aus aromatischen Dicarbonsäuren mit aliphatischen und/oder cycloaliphatischen Diolen, die durch das erfindungsgemäße Verfahren hergestellt werden, bei dem aliphatische Ether nur in Mengen von weniger als 0,1 Gew.-% entstehen und der Polyester aliphatische Ether nur in Mengen von weniger als 0,1 Gew.-% enthält.

Die Erfindung ist in den nachfolgenden Beispielen näher beschrieben. Dabei sind die aromatischen Reaktionsprodukte sowie die nicht umgesetzte Terephthalsäure mittels HPLC ermittelt worden, während die flüssigen Komponenten über Head-Space-GC und die Wasserkonzentration durch Karl-Fischer-Titration bestimmt wurden.

Die intrinsische Viskosität (I.V. [dl/gl]) wurde bei 25°C an einer Lösung von 500 mg Polyester in 10O ml eines Gemisches aus Phenol und 1,2-Dichlorbenzol (3 : 2 Gew.-Teile) gemessen.

Die COOH-Endgru ppenkonzentration im Polyester wurde mittels photometrischer Titration mit 0,05 n ethanolischer Kalilauge gegen Bromthymolblau einer Lösung eines Polyesters in einem Gemisch aus o-Kresol und Chloroform (70 : 30 Gew.-Teile) bestimmt.

### Beispiel 1

Dieses Beispiel zeigt die Umsetzung von Terephthalsäure, Isophthalsäure, Ethylenglykol, Essigsäure und Wasser. Die eingesetzte Reaktionsmischung wurde je in vier Druckbomben ohne Rührer eingefüllt und wies die nachfolgende Zusammensetzung auf:

**Tabelle 1:**

| | | |
|---|---|---|
| Wasser, demin. | 6,3 g | 5,6% |
| Essigsäure | 69,3 g | 61,3% |
| Ethylenglykol | 13,4 g | 11,9% |
| Terephthalsäure | 21,8 g | 19,3% |
| Isophthalsäure | 2,1 g | 1,9% |
| Gesamt | 112,9 g | 100% |

Die Reaktionsmischung wurde in einer Reaktionsbombe unter Stickstoffbegasung bei einer Temperatur von 260°C erhitzt. Jeweils nach 15 min wurde eine Bombe aus dem Aluminiumblock entnommen, auf Raumtemperatur abgekühlt, geöffnet und die erhaltenen aromatischen Reaktionsprodukte anschließend mittels HPLC analysiert.

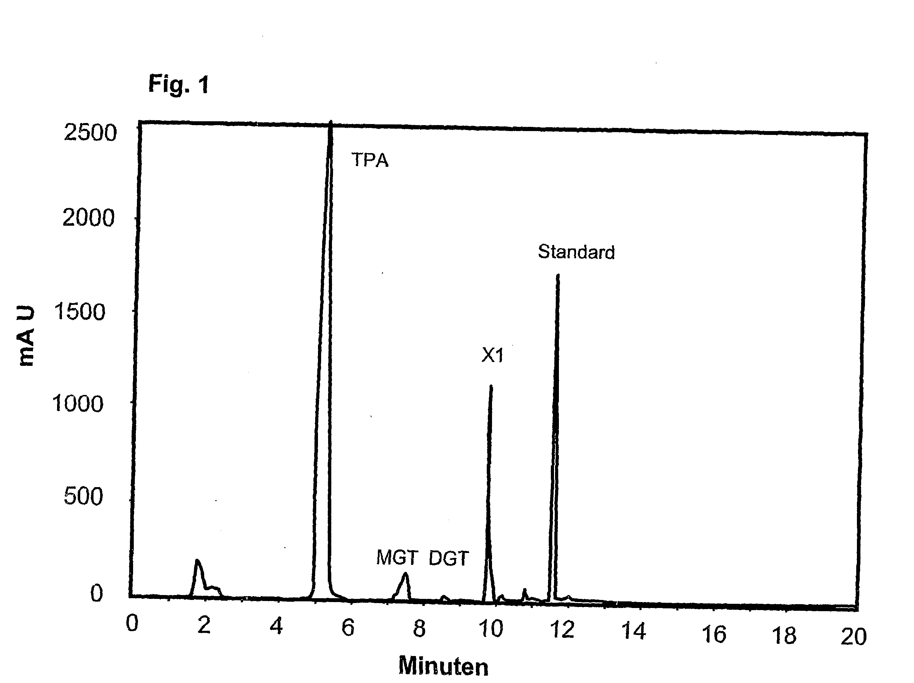

Fig. 1 zeigt das erhaltene HPLC-Chromatogramm, wobei neben unumgesetzter Terephthalsäure (TPA) ein Peak für Terephthalsäurediethylenglykolesterdiacetat (≈X1) zu erkennen ist. Monoglykolterephthalat (MGT) und Diglykolterephthalat (DGT) werden hingegen nur in sehr geringen Mengen gebildet. Unter den gegebenen Bedingungen scheint das Ethylenglykol (=EG) vorrangig mit der Essigsäure und dann in einer Esteraustauschreaktion mit der Terephthalsäure zu reagieren.

Die gebildeten Konzentrationen an Terephthalsäurediethylenglykolesterdiacetat (=X1) sind in der nachfolgenden Tabelle aufgelistet:

| **Reaktionszeit** | **Terephthalsäurediethylenglykolesterdiacetat im Reaktionsgemisch** |
|---|---|
| 0 Min | nicht nachweisbar |
| 15 Min | 0,62% |
| 30 Min | 0,88% |
| 45 Min | 1,28% |
| 60 Min | 1,60% |

### Beispiel 2

Dieses Beispiel zeigt eine ähnliche Umsetzung wie in Beispiel 1, nur wurde anstelle von Ethylenglykol (=EG) Ethylenglykoldiacetat (=EG-Diacetat) verwendet und keine Essigsäure und kein Wasser eingesetzt.

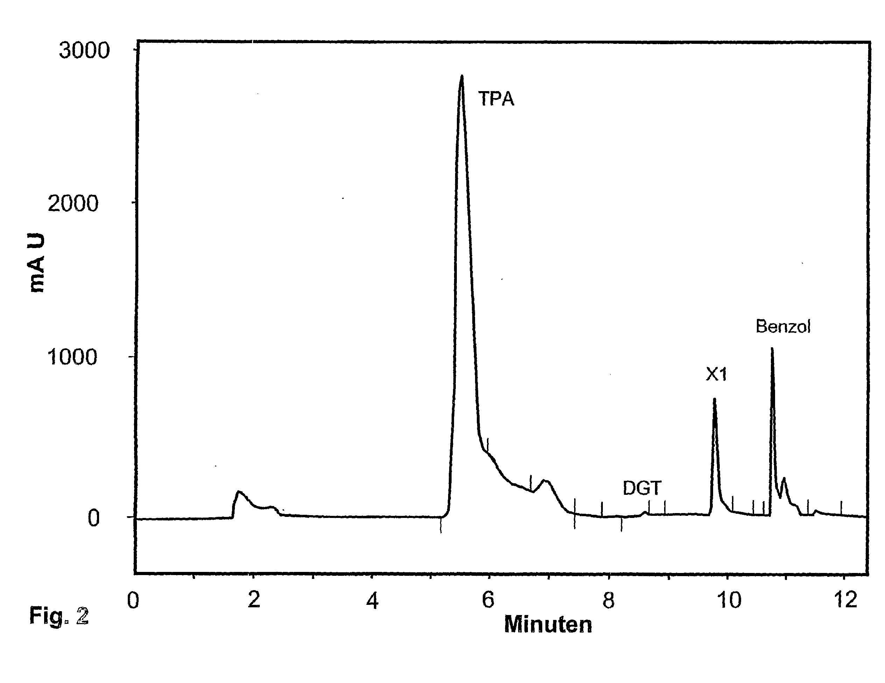

Fig. 2 zeigt das erhaltene HPLC-Chromatogramm, wobei neben Terephthalsäure (TPA) als weiterer Peak Terephthalsäurediethylenglykolesterdiacetat (=X1) und Peaks um 7 min Laufzeit zu erkennen sind, die auf Monoethylenterephthalat und Monoethylenterephthalatacetat hindeuten. Überraschenderweise ist kaum Diglykolterephthalat (=DGT) gebildet worden, dafür aber verschiedene Oligomere. Auch dies ist ein Beweis für die Essigsäure-Terephthalsäure-Reaktionsroute.

Benzol wurde als interner Standard verwendet.

### Beispiel 3

Folgende Ausgangsstoffe/Mengen wurden in einen elektrisch beheizten 2I-Autoklav eingefüllt:

| | | |
|---|---|---|
| Wasser, demin. | 220 g | 17,5% |
| Essigsäure | 415 g | 32,9% |
| Ethylenglykol | 485 g | 38,5% |
| Terephthalsäure | 140 g | 11,1% |

Der Reaktor wurde vor Versuchsbeginn gründlich mit Stickstoff gespült. Es wurde während der Versuchsdurchführung mit ca. 750 1/min gerührt. Der Reaktor wurde innerhalb 45 min auf 253°C aufgeheizt und dann innerhalb von 30 min auf Raumtemperatur abgekühlt. Die Analysenergebnisse sind aus Tabelle 1 zu entnehmen.

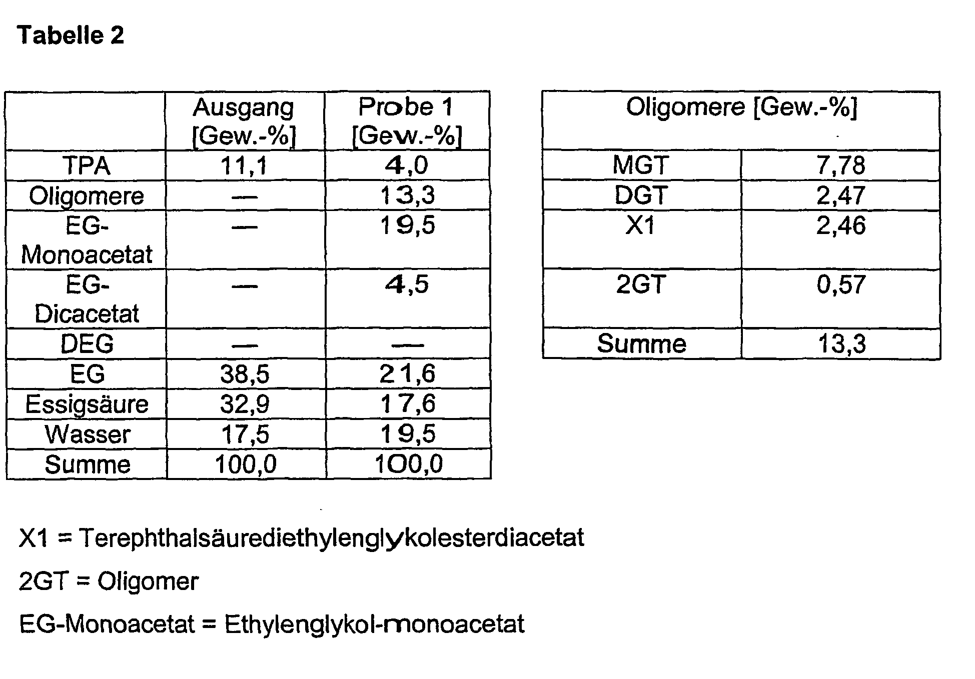

Überraschenderweise wurde im Gegensatz zur konventionellen Terephthalsäureveresterung im Polyesterprozess kein Diethylenglykol gebildet.

Der Umsatz an Terephthalsäure zu Esterprodukten betrug 64%.

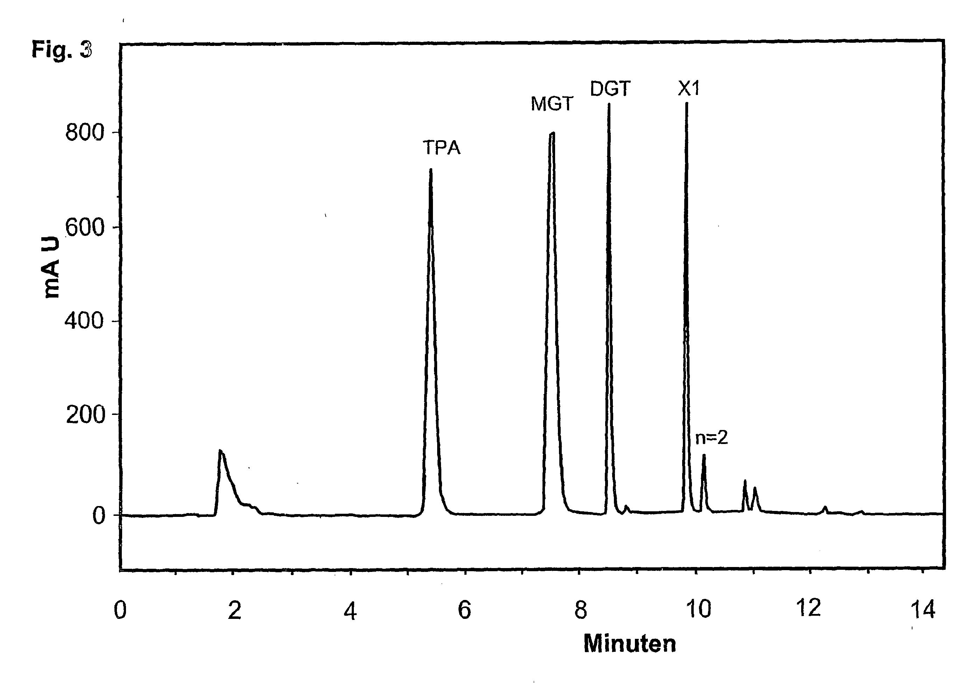

Das in Fig. 3 aufgeführte HPLC-Chromatogramm zeigt die gebildeten aromatischen Hauptprodukte und die Bildung des Terephthalsäurediethylenglykolesterdiacetats.

### Beispiel 4

Dieses Beispiel beschreibt die kontinuierliche Umsetzung von Terephthalsäure und Isophthalsäure in essigsaurer Su spension mit Ethylenglykol zu einem Polyesterprodukt. Hierzu wurde zu einem Strom einer gesättigten Lösung von 5 kg/h bestehend aus 70 Gew.-% Essigsäure, 25 Gew.-% Terephthalsäure, 0,5 Gew.-% Isophthalsäure und 4,5 Gew.-% Wasser bei einer Temperatur von 200°C und einem Druck von 25 bar ein Ethylenglykolstrom von 1 kg/h hinzudosiert und in einem ersten Rührreaktor 60 Minuten bei 5 bar und einer Temperatur von 250°C zur Reaktion gebracht. In einem zweiten nachgeschalteten Rührreaktor wurde das Reaktionsprodukt bei 1,5 bar, 260°C 180 Minuten zur Reaktion gebracht und so ein Umsatz von 92% erzielt.

Das Polyestervorprodukt wurde in einem weiteren Reaktor vorkondensiert und anschließend in einem Polykondensationsreaktor zu einem Polyester mit einer intrinsischen Endviskosität von 0,63 dl/g und einem Carboxylendgruppengehalt von 20 mmol/kg verarbeitet.

## Patentansprüche

1. Verfahren zur Herstellung von Polyethylenterephthalat aus Terephthalsäure und Ethylenglykol in Gegenwart einer Monocarbonsäure, **dadurch gekennzeichnet, dass** die in einer gesättigten Lösung vorliegende Terephthalsäure in Gegenwart einer Monocarbonsäure oder eines Gemisches einer Monocarbonsäure in Wasser oder in einem anderen geeigneten Lösungsmittel mit Ethylenglykol zu einem Terephthalsäureethylenglykolestercarboxylat und/oder dessen Oligomeren umgesetzt wird, die in weiteren Verfahrensschritten zum Polyester polykondensiert werden.

2. Verfahren nach Anspruch 1, **dadurch gekennzeichnet, dass** neben Terephthalsäure auch Isophthalsäure, Diphenyldicarbonsäure und/oder Naphthalindicarbonsäure in einer Konzentration von 0 bis 95 Gew.-% in Bezug auf die Menge an Terephthalsäure eingesetzt werden.

3. Verfahren nach den Ansprüchen 1 und 2, **dadurch gekennzeichnet, dass** die Monocarbonsäure aus der Gruppe bestehend aus Essigsäure, Ameisensäure, Propionsäure, Buttersäure, Valeriansäure und Capronsäure ausgewählt ist.

4. Verfahren nach Anspruch 3, **dadurch gekennzeichnet, dass** ein Gemisch aus verschiedenen Monocarbonsäuren eingesetzt wird.

5. Verfahren nach den Ansprüchen 1 bis 4, **dadurch gekennzeichnet, dass** die Gesamtkonzentration an Monocarbonsäure im Reaktionsgemisch 5 bis 99 Gew.-% beträgt, bezogen auf das Gewicht der eingesetzten Terephthalsäure.

6. Verfahren nach den Ansprüchen 1 bis 5, **dadurch gekennzeichnet, dass** anstelle des Ethylenglykols ein oder mehrere aliphatische und/oder cycloaliphatische Alkandiolester von Monocarbonsäuren verwendet werden.

7. Verfahren nach Anspruch 6, **dadurch gekennzeichnet, dass** man als Alkandiolester Ethylenglykolmono- und/oder diacetat einsetzt.

8. Verfahren nach den Ansprüchen 1 bis 7, **dadurch gekennzeichnet, dass** die Umsetzung der Terephthalsäure mit Ethylenglykol in Gegenwart einer Monocarbonsäure oder einer Lösung einer Monocarbonsäure in Wasser oder in einem anderen geeigneten Lösungsmittel entweder in Anwesenheit eines Katalysators oder ohne Katalysator durchgeführt wird.

9. Verfahren nach Anspruch 8, **dadurch gekennzeichnet, dass** als Katalysator ein Element aus der Gruppe Mg, Ca, Ba, Zn, Co, Al, Sb, Ti, Sn, Zr, Ge oder eine Kombination dieser Elemente ausgewählt wird.

10. Verfahren nach Anspruch 1, **dadurch gekennzeichnet, dass** das Molverhältnis der Terephthalsäure zum Ethylenglykol 0,1 : 1 bis 10 : 1 beträgt.

11. Verfahren nach den Ansprüchen 1 bis 10, **dadurch gekennzeichnet, dass** in der gesättigten Lösung die Terephthalsäure in einer Menge zwischen 0,1 und 50 Gew.-%, bezogen auf das gesamte Reaktionsgemisch, vorliegt.

12. Verfahren nach den Ansprüchen 1 bis 11, **dadurch gekennzeichnet, dass** das Terephthalsäure-ethylenglykolestercarboxylat und/oder dessen Oligomere durch Umesterung mit Ethylenglykol und durch anschließende Polykondensation zum Polyester kondensiert werden.

13. Verfahren nach Anspruch 12, **dadurch gekennzeichnet, dass** die erste Stufe des Polyesterprozesses, die Bildung des Terephthalsäure-ethylenglykolestercarboxylats und/oder dessen Oligomeren bei Temperaturen zwischen 100 bis 350°C, bevorzugt zwischen 150 bis 300°C und einem Druck zwischen 70MPa (700 mbar) bis zu 10 MPa (100 bar), bevorzugt 0.2 MPa (2) bis zu 4 MPa (40 bar), besonders bevorzugt 1 MPa (10) bis zu 3 MPa (30 bar) durchgeführt wird.

14. Verfahren nach den Ansprüchen 12 und 13, **dadurch gekennzeichnet, dass** bei der Umsetzung des Terephthalsäure-ethylenglykolestercarboxylats und/oder dessen Oligomeren mit Ethylenglykol sowie bei der anschließenden Polykondensation die Monocarbonsäure, Wasser und überschüssiges Ethylenglykol destillativ abgetrennt werden.

## Claims

1. A process for producing polyethylene terephthalate from terephthalic acid and ethylene glycol in the presence of a monocarboxylic acid, **characterized in that** the terephthalic acid, which is present in a saturated solution, is reacted in the presence of a monocarboxylic acid or a mixture of a monocarboxylic acid in water or in another suitable solvent with ethylene glycol to form a terephthalic acid ethylene glycol ester carboxylate and/or oligomers thereof, which are polycondensed to the polyester in further process steps.

2. A process according to claim 1, **characterized in that** besides terephthalic acid, isophthalic acid, diphenyldicarboxylic acid and/or naphthalenedicarboxylic acid in a concentration of 0 to 95% by weight with respect to the quantity of terephthalic acid are also used.

3. A process according to claims 1 and 2, **characterized in that** the monocarboxylic acid is selected from the group consisting of acetic acid, formic acid, propionic acid, butyric acid, valeric acid, and caproic acid.

4. A process according to claim 3, **characterized in that** a mixture of different monocarboxylic acids is used.

5. A process according to claims 1 to 4, **characterized in that** the total concentration of monocarboxylic acid in the reaction mixture is 5 to 99% by weight based on the weight of the terephthalic acid used.

6. A process according to claims 1 to 5, **characterized in that** instead of ethylene glycol, one or more aliphatic and/or cycloaliphatic alkane diol esters of monocarboxylic acids are used.

7. A process according to claim 6, **characterized in that** ethylene glycol monoacetate and/or diacetate are used as alkane diol ester.

8. A process according to claims 1 to 7, **characterized in that** the reaction of terephthalic acid with ethylene glycol in the presence of a monocarboxylic acid or a solution of a monocarboxylic acid in water or in another suitable solvent is performed either in the presence of a catalyst or without a catalyst.

9. A process according to claim 8, **characterized in that** as catalyst, an element of the group of Mg, Ca, Ba, Zn, Co, Al, Sb, Ti, Sn, Zr, Ge or a combination of these elements is selected.

10. A process according to claim 1, **characterized in that** the molar ratio of terephthalic acid to ethylene glycol is 0.1 : 1 to 10 : 1.

11. A process according to claims 1 to 10, **characterized in that** in the saturated solution, the terephthalic acid is present in a quantity between 0.1 and 50% by weight based on the total reaction mixture.

12. A process according to claims 1 to 11, **characterized in that** the terephthalic acid ethylene glycol ester carboxylate and/or oligomers thereof are condensed to the polyester by transesterification with ethylene glycol and by subsequent polycondensation.

13. A process according to claim 12, **characterized in that** the first stage of the polyester process, the formation of the terephthalic acid ethylene glycol ester carboxylate and/or oligomers thereof, is performed at temperatures between 100 and 350 °C, preferably between 150 and 300 °C, and a pressure between 700 mbar up to 100 bar, preferably 2 up to 40 bar, most preferably 10 up to 30 bar.

14. A process according to claims 12 and 13, **characterized in that** in the reaction of the terephthalic acid ethylene glycol ester carboxylate and/or oligomers thereof with ethylene glycol and in the subsequent polycondensation, the monocarboxylic acid, water, and excess ethylene glycol are separated by distillation.

## Revendications

1. Procédé de préparation de polyéthylènetéréphtalate à partir d'acide téréphtalique et d'éthylèneglycol en présence d'un acide monocarboxylique, **caractérisé en ce que** l'on fait réagir, en présence d'un acide monocarboxylique ou d'un mélange d'un acide monocarboxylique dans l'eau ou dans un autre solvant approprié, l'acide téréphtalique en solution saturée avec de l'éthylèneglycol pour obtenir un carboxylate d'ester téréphtalique d'éthylèneglycol et/ou les oligomères de ce dernier qui sont, dans des étapes de procédé ultérieures, soumis à une polycondensation donnant le polyester.

2. Procédé selon la revendication 1, **caractérisé en ce que,** outre l'acide téréphtalique, on met en oeuvre de l'acide isophtalique, de l'acide diphényldicarboxylique et/ou de l'acide naphtalènedicarboxylique dans une concentration comprise entre 0 et 95 % en poids, par rapport à la quantité d'acide téréphtalique.

3. Procédé selon les revendications 1 et 2, **caractérisé en ce que** l'acide monocarboxylique est choisi dans le groupe constitué par l'acide acétique, l'acide formique, l'acide propionique, l'acide butyrique, l'acide pentanoïque et l'acide héxanoïque.

4. Procédé selon la revendication 3, **caractérisé en ce que** l'on met en oeuvre un mélange de différents acides monocarboxyliques.

5. Procédé selon les revendications 1 à 4, **caractérisé en ce que,** dans le mélange réactionnel, la concentration globale en acide monocarboxylique et comprise entre 5 et 99 % en poids, par rapport au poids de l'acide téréphtalique mis en oeuvre.

6. Procédé selon les revendications 1 à 5, **caractérisé en ce que,** au lieu de l'éthylèneglycol, on utilise un ou plusieurs esters aliphatiques et/ou cycloaliphatiques que les alcanediols forment avec des acides monocarboxyliques.

7. Procédé selon la revendication 6, **caractérisé en ce que** l'on met en oeuvre, en tant qu'esters d'alcanediols du mono- et/ou diacétate d'éthylèneglycol.

8. Procédé selon les revendications 1 à 7, **caractérisé en ce que** la réaction de l'acide téréphtalique avec de l'éthylèneglycol en présence d'un acide monocarboxylique ou d'un mélange d'un acide monocarboxylique dans de l'eau ou dan un autre solvant approprié est effectuée soit in présence d'un catalyseur soit sans catalyseur.

9. Procédé selon la revendication 8, **caractérisé en ce que** l'on choisit, en tant que catalyseur, un élément appartenant au groupe Mg, Ca, Ba, Zn, Co, Al, Sb, Ti, Sn, Zr, Ge ou une combinaison desdits éléments.

10. Procédé selon la revendication 1, **caractérisé en ce que** le rapport molaire entre l'acide téréphtalique et l'éthylèneglycol est compris entre 0,1 : 1 et 10 : 1.

11. Procédé selon les revendications 1 à 10, **caractérisé en ce que** ladite solution saturée contient l'acide téréphtalique dans une quantité comprise entre 0,1 et 50 % en poids, par rapport à l'intégralité du mélange réactionnel.

12. Procédé selon les revendications 1 à 11, **caractérisé en ce que** ledit carboxylate d'ester téréphtalique d'éthylèneglycol et/ou les oligomères de ce dernier sont transformé en polyester par voie de condensation en subissant une transestérification avec de l'éthylèneglycol et ensuite une polycondensation.

13. Procédé selon la revendication 12, **caractérisé en ce que** la première étape du processus de polyester, à savoir la formation du carboxylate d'ester téréphtalique d'éthylèneglycol et/ou des oligomères de ce dernier, est réalisée à des températures comprises entre 100 et 350 °C, de préférence entre 150 et 300 °C, et à sous une pression comprise entre 700 mbar et jusqu'à 100 bar, de préférence entre 2 et jusqu'à 40 bar et, avec une préférence particulière, entre 10 et jusqu'à 30 bar.

14. Procédé selon les revendications 12 et 13, **caractérisé en ce que,** lors de la réaction du carboxylate d'ester téréphtalique d'éthylèneglycol et/ou ses oligomères avec l'éthylèneglycol ainsi que lors de la polycondensation qui s'ensuit, l'acide monocarboxylique, l'eau et l'excès d'éthylèneglycol sont enlevés par distillation.
